# EUROPEAN PATENT SPECIFICATION

(11) **EP 0 453 578 B1**
(45) Date of publication and mention of the grant of the patent: **21.01.1998**
(21) Application number: 90916819.7
(22) Date of filing: 15.11.1990
(51) Int. Cl.: B41J 2/01, C09D 11/00, C09D 11/02

(54) **INK JET RECORDING METHOD**
TINTENSTRAHLAUFZEICHNUNGSVERFAHREN
PROCEDE D'ENREGISTREMENT A JET D'ENCRE

(30) Priority: 16.11.1989 JP 297902/89
(43) Date of publication of application: 30.10.1991
(73) Proprietor: SEIKO EPSON CORPORATION, Shinjuku-ku Tokyo 163-08 (JP)
(72) Inventor: HAYASHI, Hiroko Seiko Epson Corporation, Suwa-shi Nagano 392 (JP)
(74) Representative: Lewin, John Harvey
(86) International application number: JP9001484
(87) International publication number: WO9107282

(56) References cited:
- JP-A- 5 212 010
- JP-A-59 182 745
- JP-A-62 223 280
- US-A- 4 849 773

## Description

### TECHNICAL FIELD

This invention relates to a drop-on-demand type ink-jet recording method and, more particularly, to an ink-jet recording method having improved setting stability.

### BACKGROUND ART

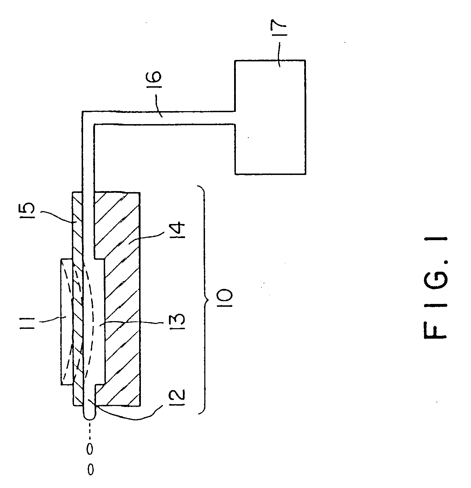

As shown in FIG. 1, a drop-on-demand type ink-jet recording apparatus basically comprises an ink ejection head 10, an ink supply tube 16, and an ink tank 17. A piezoelectric element 11 is deflected in response to an electric signal to compress ink in a cavity 13 and ink droplets are ejected from a nozzle orifice, whereby recording of characters and images is carried out.

In the recording method, bubbles remaining in the cavity 13 absorb a pressure when an electric signal is applied to deflect the piezoelectric element. Stable ink droplets are not generated from the nozzle orifice or ink droplets cannot be formed. Thus, this adversely affects setting. The bubbles remaining in the cavity is undesirable. Accordingly, whether the bubbles in the cavity can be rapidly discharged or not is a very important matter in the drop-on-demand type ink-jet recording method.

While the ink system members comprising the ink ejection head, ink supply tube and ink tank can be composed of various materials, most ink system members are generally composed of plastics from the standpoints of moldability, cost and other requirements. Further, the plastics are advantageous that they have mass productivity, moldability, weldability, excellent chemical resistance and low cost. Thus, the plastics have sufficient merits as materials from which a head for ink jet is produced, and therefore they are widely examined with regard to their utilization.

However, in the plastic ink system members, the surface energy of the plastics is generally low and therefore it is difficult to wet the plastics with a liquid. That is, bubbles strongly deposited on the surface of the plastics remain in the cavity due to poor wettability even if a discharge operation is carried out. This results in such a problem that setting stability is reduced.

Thus, heretofore, a trial for improving wettability has been carried out by subjecting the surface of the plastics to specific treatment.

However, the surface treatment of the plastics poses the following problems. Steps are complicated, persistence of a treatment effect is insufficient and cost is greatly increased.

Accordingly, an object of the present invention is to provide an ink-jet recording method having high setting performance and excellent setting stability without impairing a characteristic of low cost of the plastics.

JP-A-62-223280 discloses a non-aqueous ink composition. The document is concerned with the problem of an unstable ink meniscus. There is no disclosure of an ink composition containing a specific additive in addition to a dye as defined below in the present invention.

JP-A-59-182745 discloses an ink jet recording instrument. However, there is no disclosure of the use of an aqueous ink composition which contains a dye and a specific additive as defined below.

JP-A-52-12010 discloses a compound of the formula (I) as defined below. However, this compound is merely used as a dye itself. There is no disclosure of the use of the compound in addition to a dye.

### DISCLOSURE OF INVENTION

The present invention provides an ink-jet recording method using an ink-jet recording apparatus, at least a portion of an ink supply system member in the ink jet recording apparatus being composed of a plastic material, characterised in that
said method uses an aqueous ink composition having a contact angle in the range of from 10 to 60° to said plastic material of the ink supply system member, said aqueous ink composition comprising (i) a dye, (ii) water, (iii) a wetting agent and (iv) 0.1 to 5 % by weight of an additive selected from at least one compound represented by the following formulae (I) and/or (II): 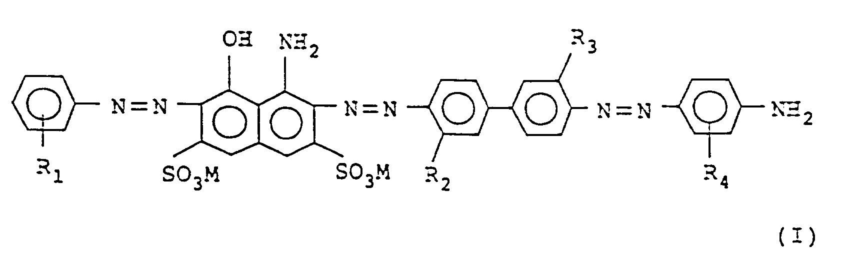 wherein
R₁ is a group selected from hydrogen, an alkyl group, an amino group, a hydroxyl group, and halogen;
R₂ and R₃ are each hydrogen or an alkyl group;
R₄ is hydrogen or an amino group; and
M is an alkali metal or an alkanol amine; and 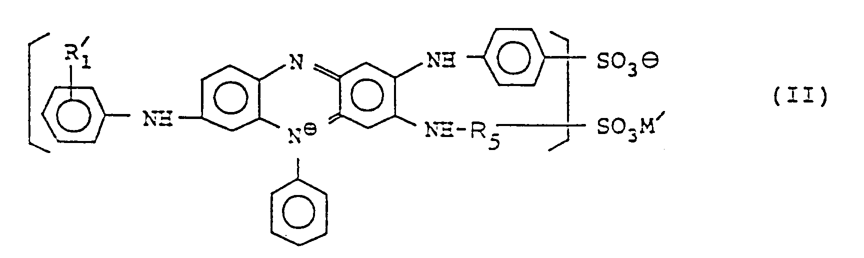 wherein
   (1) R'₁ is hydrogen, R₅ is a phenylene group, and M' is sodium;
   (2) R'₁ is a hydroxyl group, R₅ is a methyl group-substituted phenylene group, and M' is sodium;
   (3) R'₁ is an amino group, R₅ is a hydroxyl group-substituted phenylene group, and M' is sodium; or
   (4) R'₁ is hydrogen, R₅ is an amino group-substituted phenylene group, and M' is sodium.

### BRIEF DESCRIPTION OF DRAWINGS

FIG. 1 is a schematic view showing the principle of a drop-on-demand type ink-jet recording apparatus.

### BEST MODE FOR CARRYING OUT THE INVENTION

The present invention will be described in more detail.

We have carried out examination in order to improve setting stability. It turned out that compatibility of ink with plastics of an ink system member, i.e., the contact angle of the ink to the plastics has large influence on recording characteristics including setting stability.

The contact angles of ink to various plastics are varied and the ink exhibiting such contact angles are used to evaluate recording characteristics such as setting stability and setting performance. It turned out that when the contact angles of the ink to the plastics are from 10° to 60°, both setting stability and setting performance are satisfied. The preferred contact angles of the ink to the plastics is from 15° to 50°, and the most preferred contact angles of the ink to the plastics are from 20° to 40°. When the ink ejection head in the ink system member is composed of plastics, it turned out that recording characteristics such as setting stability and setting performance are well-matchedly satisfied if the contact angles of the ink to the plastics are from 10° to 60°.

The plastic materials used in the ink system member are those meeting requirements such as flexibility, heat resistance, molding precision, ink resistance and cost. Examples of such plastic materials include polyethylene, polypropylene, nylon, polyvinyl chloride, polyacetal, Teflon, acrylic resins, AB resins and ABS resins. Means such as aluminum laminates may be used in order to further satisfy the requirements.

The plastic head used in the present invention is preferably composed of amorphous resins such as polysulfones, polycarbonates, polyether sulfones, and polyether imides. Plastics other than those described above can also be used provided that they satisfy the requirements.

Ink used in the present invention will be described. The present ink for recording comprises at least coloring agents, wetting agents for preventing nozzle clogging, additives for adjusting wettability and contact angles, and water which is a solvent. The coloring agents which can be used in the present invention include organic and inorganic pigments, and acid dyes, basic dyes and direct dyes. Such coloring agents can be used alone or in mixture. Examples of the pigments include:
- carbon black: MA 7, MA 8, MA 100, #40, #45 and #50 (manufactured by Mitsubishi Kasei Kogyo);
- C.I. Pigment Yellow: 1, 2, 3, 5 and 12;
- C.I. Pigment Red: 2, 3, 5, 16, 23, 31, 49, 57 and 63; and
- C.I. Pigment Blue: 1, 2, 15, 16 and 17.

Examples of the dyes include:
- C.I. Direct Yellow: 12, 26, 86 and 130;
- C.I. Direct Red: 9, 13, 17 and 23;
- C.I. Direct Blue: 78, 86 and 199;
- C.I. Direct Black: 19, 22, 28 and 154;
- C.I. Acid Yellow: 23 and 25;
- C.I. Acid Red: 52, 254 and 289;
- C.I. Acid Blue: 9 and 254;
- C.I. Acid Black: 52, 172 and 208; and
- C.I. Food Black: 2.

The amount added is preferably from 0.5 to 10 wt% such that sufficient color density is obtained and the viscosity of ink is reduced.

In addition to the coloring components described above, the ink composition according to the present invention can contain at least one wetting agent selected from the group consisting of ethylene glycol, diethylene glycol, triethylene glycol, polyethylene glycol and glycerin; and water.

The content of the wetting agent described above is usually from 1 to 25% by weight, more preferably from 5 to 15% by weight. It is desirable that water be added in an amount in the range of 75 to 95% by weight, more particularly from 80 to 90% by weight.

The ink composition contains, as additives for adjusting wettability, particularly contact angles, from 0.1 to 5% by weight of one or more compounds represented by the general formulae (I) and/or (II): 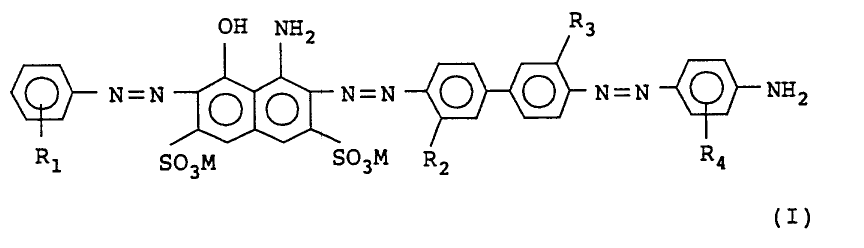 wherein
R₁ is a group selected from hydrogen, an alkyl group, an amino group, a hydroxyl group, and halogen;
R₂ and R₃ are each hydrogen or an alkyl group;
R₄ is hydrogen or an amino group; and
M is an alkali metal or an alkanol amine; and 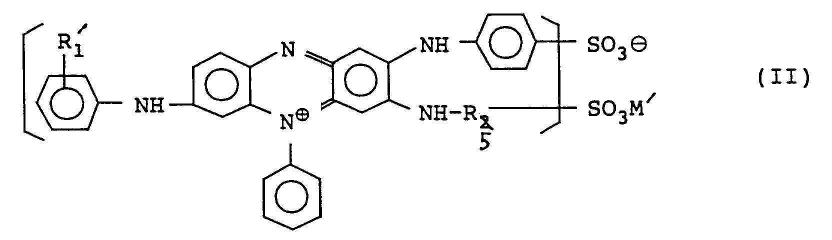 wherein
R'₁, R₅ and M' are as defined above.

Preferred examples of the compounds of the general formula (I) described above include the following compounds:
(1) those wherein R₁ is hydrogen, R₂ and R₃ are each a methyl group, R₄ is an amino group and M is sodium;
(2) those wherein R₁ is a hydroxyl group, R₂ and R₃ are each a methyl group, R₄ is an amino group and M is lithium;
(3) those wherein R₁ is an amino group, R₂ and R₃ are each hydrogen, R₄ is an amino group, and M is sodium;
(4) those wherein R₁ is hydrogen, R₂ and R₃ are each hydrogen, R₄ is a hydroxyl group, and M is sodium; and
(5) those wherein R₁ is a methyl group, R₂ and R₃ are each a methyl group, R₄ is an amino group, and M is -N(CH₂CH₂OH)₃ and sodium.

The compounds of the general formula (II) described above include the following compounds:
(1) those wherein R'₁ is hydrogen, R₅ is a phenylene group, and M' is sodium;
(2) those wherein R'₁ is a hydroxyl group, R₅ is a methyl group-substituted phenylene group, and M' is sodium;
(3) those wherein R'₁ is an amino group, R₅ is a hydroxyl group-substituted phenylene group, and M' is sodium; and
(4) those wherein R'₁ is hydrogen, R₅ is an amino group-substituted phenylene group, and M' is sodium.

In the present invention, a surfactant can be suitably added in combination with the compound described above as a component for adjusting the contact angle of the ink composition to the plastic material to the optimum range described above. Alternatively, such a surfactant can be used in place of the compound described above. Preferred surfactants added for such a purpose include fatty acid salts such as potassium oleate, sodium laurate, and sodium dioctylsulfosuccinate. These surfactants are usually added in an amount of the order of 0.01 to 10% by weight, preferably from 0.1 to 5% by weight.

### Experimental Examples

The present invention will be described in detail with reference to Examples.

The following Ink Compositions [A], [B] and [C] were used as fundamental compositions. The varying amount of a surfactant, potassium oleate, sodium laurate or sodium dioctylsulfosuccinate was added to the Ink Compositions [A], [B] and [C] as an additive for adjusting the wettability of plastics to prepare ink.

The types of inks evaluated are shown in Table 1.

| [Ink Composition A] | | |
|---|---|---|
| Dye | C.I. Direct Black 19 | 1% |
| Solvent | glycerin | 10% |
| | water | balance |

| [Ink Composition B] | | |
|---|---|---|
| Dye | C.I. Direct Black 19 | 2% |
| Solvent | diethylene glycol | 5% |
| | ethanol | 6% |
| | water | balance |

| [Ink Composition C] | | |
|---|---|---|
| Dye | C.I. Direct Blue 86 | 2% |
| Solvent | triethylene glycol | 5% |
| | water | balance |

**TABLE 1**

| No. | Additive | Amount Added |
|---|---|---|
| A1 | none | |
| 2 | potassium oleate | 0.01 (wt%) |
| 3 | potassium oleate | 0.02 |
| 4 | potassium oleate | 0.05 |
| 5 | potassium oleate | 0.1 |
| B1 | sodium laurate | 0.01 |
| 2 | sodium laurate | 0.02 |
| 3 | sodium laurate | 0.05 |
| 4 | sodium laurate | 0.1 |
| C1 | sodium dioctylsulfosuccinate | 0.05 |
| 2 | sodium dioctylsulfosuccinate | 0.1 |
| 3 | sodium dioctylsulfosuccinate | 1.0 |

The contact angles of the ink shown in Table 1 to ink system members shown in Table 2 were measured. The results are shown in Tables 3, 4 and 5.

The contact angles are values obtained by reading values after 60 seconds by means of a contact angle meter (manufactured by Kyowa Kaimen Kagaku, K.K.)

**TABLE 2**

| Structural Members of Ink System and Optimum Setting Conditions | | | | |
|---|---|---|---|---|
| No. | Head | Supply Tube | Tank | Conditions |
| 1 | borosilicate glass | polyethylene | polyethylene | 130V, 3kHz |
| 2 | polysulfone | Teflon | nylon | 150V, 3kHz |
| 3 | polycarbonate | polyethylene | polyvinylidene chloride | 150V, 3kHz |

**TABLE 3**

| Structural Members of Ink System - No. 1 - | | | |
|---|---|---|---|
| No. | Head Borosilicate Glass | Supply Tube Polyethylene | Tank Polyethylene |
| A1 | 20° | 87° | 85° |
| 2 | 18 | 65 | 67 |
| 3 | 15 | 40 | 41 |
| 4 | 13 | 35 | 33 |
| 5 | 5 | 30 | 31 |
| B1 | 21 | 77 | 72 |
| 2 | 18 | 58 | 59 |
| 3 | 16 | 47 | 42 |
| 4 | 14 | 40 | 38 |
| C1 | 10 | 25 | 28 |
| 2 | immeasurable | 13 | 12 |
| 3 | immeasurable | immeasurable | immeasurable |

**TABLE 4**

| Structural Members of Ink System - No. 2 - | | | |
|---|---|---|---|
| No. | Head Polysulfone | Supply Tube Teflon | Tank Nylon |
| A1 | 80° | 90° | 80° |
| 2 | 64 | 75 | 60 |
| 3 | 53 | 63 | 40 |
| 4 | 46 | 56 | 33 |
| 5 | 38 | 49 | 24 |
| B1 | 70 | 80 | 68 |
| 2 | 60 | 67 | 54 |
| 3 | 52 | 59 | 40 |
| 4 | 45 | 48 | 35 |
| C1 | 22 | 27 | 21 |
| 2 | 15 | 21 | 19 |
| 3 | immeasurable | immeasurable | immeasurable |

**TABLE 5**

| Structural Members of Ink System - No. 3 - | | | |
|---|---|---|---|
| No. | Head Polycarbonate | Supply Tube Polyethylene | Tank Polyvinylidene Chloride |
| A1 | 78° | 87° | 75° |
| 2 | 63 | 65 | 60 |
| 3 | 50 | 40 | 45 |
| 4 | 44 | 35 | 30 |
| 5 | 35 | 30 | 25 |
| B1 | 67 | 73 | 68 |
| 2 | 56 | 58 | 55 |
| 3 | 49 | 47 | 44 |
| 4 | 39 | 40 | 35 |
| C1 | 20 | 31 | 28 |
| 2 | 11 | 15 | 18 |
| 3 | immeasurable | immeasurable | immeasurable |

The ink shown in Table 1 and the ink system members shown in Table 2 were then used to evaluate recording characteristics shown as follows.

### Setting Carriage Return Test

In a continuous setting, a carriage return time during the trouble processes such as dots miss and setting disturbance is measured. A carriage return operation is carried out by sucking ink from a head nozzle at a rate of 5 ml per minute by means of a pump.

### Setting Stability Test

A continuous setting is carried out, the number of the total setting lines is divided by the number of dots miss generated during the continuous setting process to calculate the number of average setting lines. Setting stability is judged from the values according to the following criteria:
- no more than 10,000 lines: : X
- 10,000 - 30,000 lines: : △
- 30,000 - 50,000 lines: : ○
- more than 50,000 lines: : ⓞ

### Setting Performance

Setting is carried out using Xerox P (manufactured by Fuji Xerox Company), the presence of a smudge is examined, and setting performance is judged according to the following criteria:
- distinctive setting without any smudge: : ⓞ
- unnoticeable smudge: : ○
- noticeable smudge: : △
- severe smudge: : X

The evaluation results of recording characteristics are shown in Tables 6, 7 and 8.

**TABLE 6**

| Structural Members of Ink System - No. 1 - | | | |
|---|---|---|---|
| No. | Carriage Return Property | Setting Stability | Setting Performance |
| A1 | 120 < | X | ○ |
| 2 | 25 SEC | X | ⓞ |
| 3 | 20 | ○ | ⓞ |
| 4 | 15 | ⓞ | ⓞ |
| 5 | 12 | ⓞ | ⓞ |
| B1 | 54 | X | ⓞ |
| 2 | 29 | ○ | ⓞ |
| 3 | 24 | ○ | ⓞ |
| 4 | 17 | ⓞ | ⓞ |
| C1 | 10 | ⓞ | ⓞ |
| 2 | 10 | ○ | ⓞ |
| 3 | 120 < | X | X |

**TABLE 7**

| Structural Members of Ink System - No. 2 - | | | |
|---|---|---|---|
| No. | Carriage Return Property | Setting Stability | Setting Performance |
| A1 | 120 < | X | ○ |
| 2 | 64 | △ | ⓞ |
| 3 | 42 | △ | ⓞ |
| 4 | 30 | ○ | ⓞ |
| 5 | 20 | ⓞ | ⓞ |
| B1 | 80 | △ | ⓞ |
| 2 | 58 | △ | ⓞ |
| 3 | 40 | ○ | ⓞ |
| 4 | 25 | ⓞ | ⓞ |
| C1 | 17 | ⓞ | ⓞ |
| 2 | 14 | ○ | ⓞ |
| 3 | 120 < | X | X |

**TABLE 8**

| Structural Members of Ink System - No. 3 - | | | |
|---|---|---|---|
| No. | Carriage Return Property | Setting Stability | Setting Performance |
| A1 | 120 < | X | ○ |
| 2 | 59 | △ | ⓞ |
| 3 | 44 | △ | ⓞ |
| 4 | 31 | ○ | ⓞ |
| 5 | 18 | ⓞ | ⓞ |
| B1 | 76 | △ | ⓞ |
| 2 | 52 | ○ | ⓞ |
| 3 | 37 | ○ | ⓞ |
| 4 | 24 | ⓞ | ⓞ |
| C1 | 20 | ⓞ | ⓞ |
| 2 | 17 | ○ | ⓞ |
| 3 | 120 < | X | X |

As shown in Table 3 through Table 8, in the ink-jet recording method wherein the ink system members are composed of the plastics, recording characteristics such as setting stability and setting performance can be sufficiently satisfied if the contact angle of the ink to the plastic material from which the ink system members are produced is from 10° to 60°. If the contact angle is less than 10°, wettability is good, but sudsing of the ink will be vigorous and the discharge property of bubbles will be reduced. Further, paper is liable to be wetted. As a result, a smudge is liable to be extremely generated. When the contact angle of the ink to the plastic material of the ink system members is from 15° to 50°, most preferably from 20° to 40°, preferred effects are obtained with respect to recording characteristics such as setting stability and setting performance.

Examples wherein the compounds of the general formulae (I) and (II) described above as well as a wetting agent are used as additive components of an ink composition as well as Comparative Examples are then described.

In the following compositions of Examples, the symbols, e.g., "I-(1)" and "II-(1)" shown in the column of Compound refer to the compound of the above concrete example (1) of the general formula (I) and the compound of the above concrete example (1) of the general formula (II), respectively

| Example a | | |
|---|---|---|
| Dye | C.I. Direct Black 19 | 1% |
| Compound | I-(1) | 0.5% |
| Solvent | glycerin | 10% |
| | Water | balance |

| Example b | | |
|---|---|---|
| Dye | C.I. Acid Black 9 | 1% |
| Compound | I-(1) | 1% |
| Solvent | diethylene glycol | 10% |
| | Water | balance |

| Example c | | |
|---|---|---|
| Dye | C.I. Food Black 2 | 2% |
| Compound | I-(2) | 2% |
| Solvent | diethylene glycol | 5% |
| | glycerin | 5% |
| | Water | balance |

| Example d | | |
|---|---|---|
| Dye | C.I. Direct Black 19 | 1% |
| Compound | I-(5) | 1% |
| Solvent | diethylene glycol | 10% |
| | Water | balance |

| Example e | | |
|---|---|---|
| Dye | MA100 (Mitsubishi Kasei Kogyo, K.K.) | 3% |
| Compound | I-(1) | 2% |
| Solvent | diethylene glycol | 5% |
| | glycerin | 5% |
| | Water | balance |

| Example f | | |
|---|---|---|
| Dye | C.I. Direct Black 19 | 1% |
| Compound | II-(5) | 0.5% |
| Solvent | diethylene glycol | 10% |
| | Water | balance |

| Example g | | |
|---|---|---|
| Dye | C.I. Acid Black 169 | 2% |
| Compound | II-(1) | 1% |
| Solvent | glycerin | 10% |
| | Water | balance |

| Example h | | |
|---|---|---|
| Dye | C.I. Food Black 2 | 2% |
| Compound | II-(3) | 2% |
| Solvent | triethylene glycol | 5% |
| | glycerin | 5% |
| | Water | balance |

| Example i | | |
|---|---|---|
| Dye | MA7 (Mitsubishi Kasei Kogyo, K.K.) | 2% |
| Compound | II-(1) | 2% |
| Solvent | diethylene glycol | 5% |
| | glycerin | 5% |
| | Water | balance |

| Comparative Example j | | |
|---|---|---|
| Dye | C.I. Direct Black 19 | 3% |
| Solvent | glycerin | 10% |
| | Water | balance |

| Comparative Example k | | |
|---|---|---|
| Dye | C.I. Acid Black 9 | 2% |
| Solvent | diethylene glycol | 10% |
| | Water | balance |

| Comparative Example ℓ | | |
|---|---|---|
| Dye | C.I. Food Black 9 | 3% |
| Solvent | diethylene glycol | 10% |
| | glycerin | 5% |
| | Water | balance |

The inks shown in Examples a through i and Comparative Examples j through ℓ were used to measure the contact angles of the inks to the ink system members shown in Nos. 2 and 3 of Table 2.

Recording characteristics obtained when the ink system members shown in Nos. 2 and 3 of Table 2 were used were evaluated. The results are shown.

With respect to stability, carriage return property as well as smudge among the following evaluation items, they were measured and evaluated according to the same manner as that described above. With respect to bending (flight bending), the following method was used.

A continuous setting of one page is carried out, thereafter waited for 30 seconds and a setting is again carried out. A setting state at this time is observed, the presence of flight bending is checked. Recording characteristics are judged according to the following criteria:
- no bending: : ⓞ
- slight bending: : △
- severe bending: : X

**TABLE 11**

| Data of Contact Angle of each Ink to various Materials | | | | | | |
|---|---|---|---|---|---|---|
| Ink System | No. 2 | | | No. 3 | | |
| | Head Polysulfone | Supply Tube Teflon | Tank Nylon | Head Polysulfone | Tube Supply Teflon | Tank Nylon |
| a | 42 | 47 | 40 | 38 | 40 | 41 |
| b | 18 | 40 | 17 | 14 | 25 | 17 |
| c | 45 | 59 | 36 | 37 | 50 | 34 |
| d | 43 | 57 | 35 | 38 | 52 | 31 |
| e | 25 | 38 | 32 | 18 | 17 | 19 |
| f | 40 | 48 | 30 | 34 | 41 | 33 |
| g | 44 | 50 | 34 | 40 | 44 | 36 |
| h | 43 | 49 | 38 | 32 | 41 | 34 |
| i | 28 | 45 | 30 | 19 | 17 | 18 |
| j | 72 | 80 | 65 | 64 | 65 | 67 |
| k | 79 | 85 | 67 | 66 | 64 | 61 |
| ℓ | 67 | 80 | 64 | 68 | 67 | 62 |

In Table 11, a unit of data is in (°).

**TABLE 12**

| Evaluation Results of each Ink in Ink System using various Materials | | | | | | | | |
|---|---|---|---|---|---|---|---|---|
| | No. 2 | | | | No. 3 | | | |
| | Stability | Carriage Return Property | Bending | Sludge | Stability | Carriage Return Property | Bending | Smudge |
| a | ⓞ | 20 S | ⓞ | ⓞ | ⓞ | 10 S | ⓞ | ⓞ |
| b | ○ | 30 | ⓞ | ⓞ | ○ | 28 | ⓞ | ⓞ |
| c | ⓞ | 16 | ⓞ | ⓞ | ⓞ | 12 | ⓞ | ⓞ |
| d | ⓞ | 14 | ⓞ | ⓞ | ⓞ | 15 | ⓞ | ⓞ |
| e | ○ | 28 | ⓞ | ⓞ | ○ | 24 | ⓞ | ⓞ |
| f | ⓞ | 15 | ⓞ | ⓞ | ⓞ | 19 | ⓞ | ⓞ |
| g | ⓞ | 7 | ⓞ | ⓞ | ⓞ | 10 | ⓞ | ⓞ |
| h | ⓞ | 10 | ⓞ | ⓞ | ⓞ | 12 | ⓞ | ⓞ |
| i | ⓞ | 13 | ⓞ | ⓞ | ○ | 34 | ⓞ | ⓞ |
| j | X | 120< | X | ⓞ | X | 68 | X | ⓞ |
| k | X | 120< | X | ⓞ | X | 70 | X | ⓞ |
| ℓ | X | 120< | X | ⓞ | X | 90 | X | ⓞ |

As described above, characteristics required for the ink-jet printer such as setting stability, carriage return property and setting performance can be satisfied by using the ink containing at least one compound selected from the general formulae [I] and [II].

As described above, in the ink-jet recording method wherein any one of the ink supply passway comprising the ink ejection head, ink supply tube and ink tank is composed of the plastic material, the feature of the recording method can be maximized by using the ink wherein the contact angle of the ink to said plastic material is from 10° to 60° when the ink contains additives such as surfactants or when it contains the compound [I] or [II].

Thus, according to the present invention, troubles such as dots miss can be rapidly overcome in the case of heads composed of plastics having poor wettability. Further, even if the wettability to plastics is increased, wettability on paper is retained at a level exhibiting no smudge and setting of high performance can be obtained.

When the head and other ink system members are composed of plastics, in the prior art, bubbles in a flow path are not sufficiently discharged by carriage return operation and dots miss is suddenly generated during the setting process, whereas the present invention can overcome such drawbacks.

The step of surface treating plastics to increase wettability which has been used in the prior art can be omitted, and merits of plastics such as low cost and mass productivity can be sufficiently exploited.

## Claims

1. An ink-jet recording method using an ink-jet recording apparatus, at least a portion of an ink supply system member in the ink jet recording apparatus being composed of a plastic material, characterised in that
said method uses an aqueous ink composition having a contact angle in the range of from 10 to 60° to said plastic material of the ink supply system member, said aqueous ink composition comprising (i) a dye, (ii) water, (iii) a wetting agent and (iv) 0.1 to 5% by weight of an additive selected from at least one compound represented by the following formulae (I) and/or (II): 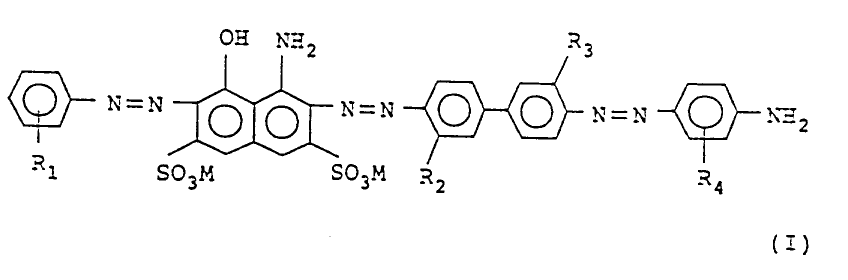 wherein
R₁ is a group selected from hydrogen, an alkyl group, an amino group, a hydroxyl group, and halogen;
R₂ and R₃ are each hydrogen or an alkyl group;
R₄ is hydrogen or an amino group; and
M is an alkali metal or an alkanol amine; and 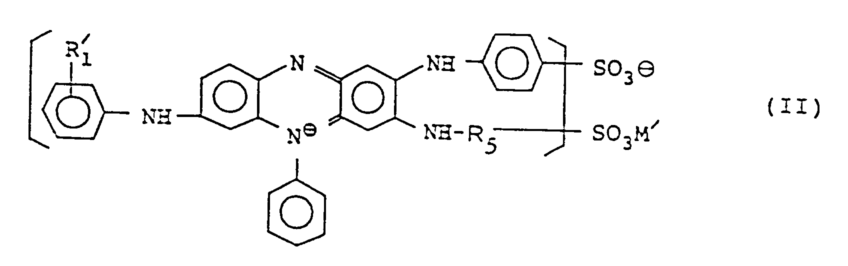 wherein
(1) R'₁ is hydrogen, R₅ is a phenylene group, and M' is sodium;
(2) R'₁ is a hydroxyl group, R₅ is a methyl group-substituted phenylene group, and M' is sodium;
(3) R'₁ is an amino group, R₅ is a hydroxyl group-substituted phenylene group, and M' is sodium; or
(4) R'₁ is hydrogen, R₅ is an amino group-substituted phenylene group, and M' is sodium.

2. The method according to claim 1, wherein the contact angle of the ink composition to the plastic material is in the range of 15 to 50°.

3. The method according to claim 1, wherein the contact angle of the ink composition to the plastic material is in the range of 20 to 40°.

4. The method according to claim 1, wherein the ink supply system member in the ink jet recording apparatus has an ink ejection head, an ink supply tube and an ink tank, and the ink ejection head comprising a plastic material.

5. The method according to claim 1, wherein the ink composition contains at least one wetting agent selected from the group consisting of ethylene glycol, diethylene glycol, triethylene glycol, polyethylene glycol and glycerin, and water.

6. An ink jet recording apparatus supplied with an aqueous ink composition comprising components (i), (ii), (iii) and (iv) as defined in claim 1, and having an ink supply system member of which at least a portion is composed of a plastic material, the ink composition having a contact angle in the range of 10 to 60° to the plastic material of the ink supply system member.

7. An aqueous ink composition for use in an ink jet recording apparatus, the ink composition comprising components (i), (ii), (iii) and (iv) as defined in claim 1, and having a contact angle in the range of 10 to 60° to an ink supply system member composed of a plastic material selected from polysulfone, polytetrafluoroethylene, nylon, polycarbonate, polyethylene and polyvinylidene chloride.

## Patentansprüche

1. Tintenstrahlaufzeichnungsverfahren unter Verwendung einer Tintenstrahlaufzeichnungsvorrichtung, wobei mindestens ein Teil eines Tintenzuführsystemglieds in der Tintenstrahlaufzeichnungsvorrichtung aus einem Kunststoffmaterial besteht, dadurch gekennzeichnet, daß
das Verfahren eine wäßrige Tintenzusammensetzung mit einem Randwinkel im Bereich von 10 bis 60°C zu dem Kunststoffmaterial des Tintenzufuhrsystemglieds verwendet, wobei die wäßrige Tintenzusammensetzung folgendes umfaßt:
(i) einen Farbstoff, (ii) Wasser, (iii) ein Benetzungsmittel und (iv) 0,1 bis 5 Gew.-% eines Additivs, ausgewählt aus mindestens einer der Verbindungen, dargestellt durch die folgende Formel (I) und/oder (II): 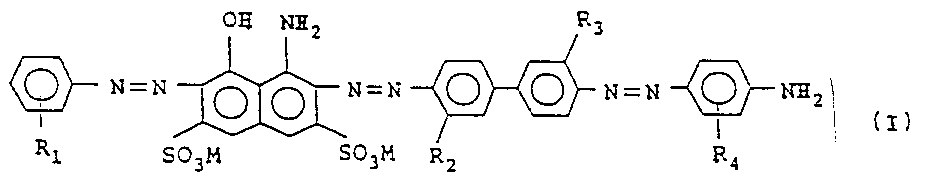
worin
R₁ eine Gruppe ist, ausgewählt aus Wasserstoff, einer Alkylgruppe, einer Aminogruppe, einer Hydroxylgruppe und Halogen;
R₂ und R₃ bedeuten jeweils Wasserstoff oder eine Alkylgruppe;
R₄ bedeutet Wasserstoff oder eine Aminogruppe; und
M bedeutet ein Alkalimetall oder ein Alkanolamin; und 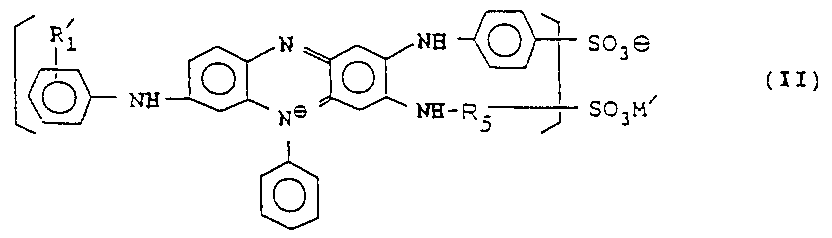 worin
(1) R'₁ Wasserstoff bedeutet, R₅ eine Phenylengruppe bedeutet und M' Natrium bedeutet;
(2) R'₁ bedeutet eine Hydroxylgruppe, R₅ bedeutet eine Phenylengruppe, die mit einer Methylgruppe substituiert ist und M' bedeutet Natrium;
(3) R'₁ bedeutet eine Aminogruppe, R₅ bedeutet eine Phenylengruppe, die mit einer Hydroxylgruppe substituiert ist und M' bedeutet Natrium, oder
(4) R'₁ bedeutet Wasserstoff, R₅ bedeutet eine Phenylengruppe, die mit einer Aminogruppe substituiert ist und M bedeutet Natrium.

2. Verfahren nach Anspruch 1, worin der Randwinkel der Tintenzusammensetzung zum dem Kunststoffmaterial im Bereich von 15 zu 50° liegt.

3. Verfahren nach Anspruch 1, worin der Randwinkel der Tintenzusammensetzung zu dem Kunststoffmaterial im Bereich von 20 bis 40° liegt.

4. Verfahren nach Anspruch 1, worin das Tintenzufuhrsystemglied in der Tintenstrahlaufzeichnungsvorrichtung einen Tintenstrahlkopf aufweist, eine Tintenzufuhrleitung und einen Tintentank und wobei der Tintenstrahlkopf ein Kunststoffmaterial umfaßt.

5. Verfahren nach Anspruch 1, worin die Tintenzusammensetzung mindestens ein Benetzungsmittel enthält, ausgewählt aus der Gruppe, bestehend aus Ethylenglycol, Diethylenglycol, Triethylenglycol, Polyethylenglycol und Glycerin sowie Wasser.

6. Tintenstrahlaufzeichnungsvorrichtung, ausgerüstet mit einer wäßrigen Tintenzusammensetzung, umfassend die Bestandteile (i), (ii), (iii) und (iv) nach Anspruch 1 und mit einem Tintenzufuhrsystemglied, von dem mindestens ein Teil aus einem Kunststoffmaterial besteht, wobei die Tintenzusammensetzung einen Randwinkel im Bereich von 10 bis 60° zu dem Kunststoffmaterial des Tintenzufuhrsystemglieds aufweist.

7. Wäßrige Tintenzusammensetzung zur Verwendung in einer Tintenstrahlaufzeichnungsvorrichtung, wobei die Tintenzusammensetzung die Bestandteile (i), (ii), (iii) und (iv), wie definiert in Anspruch 1, umfaßt und einen Randwinkel im Bereich von 10 bis 60°C zu einem Tintenzufuhrsystemglied aufweist, das aus einem Kunststoffmaterial besteht, ausgewählt aus Polysulfon, Polytetrafluorethylen, Nylon, Polycarbonat, Polyethylen und Polyvinylidenchlorid.

## Revendications

1. Procédé d'enregistrement à jet d'encre utilisant un appareil d'enregistrement à jet d'encre, au moins une partie d'un organe de système de délivrance d'encre dans l'appareil d'enregistrement à jet d'encre étant composé d'une matière plastique, caractérisé en ce que :
ledit procédé utilise une composition d'encre aqueuse ayant un angle de contact avec ladite matière plastique de l'organe de système de délivrance d'encre allant de 10 à 60°, ladite composition d'encre aqueuse comprenant :
(i) un colorant, (ii) de l'eau, (iii) un agent mouillant et (iv) de 0,1 à 5 % en poids d'un additif choisi parmi au moins un composé représenté par les formules (I) et/ou (II) suivantes : 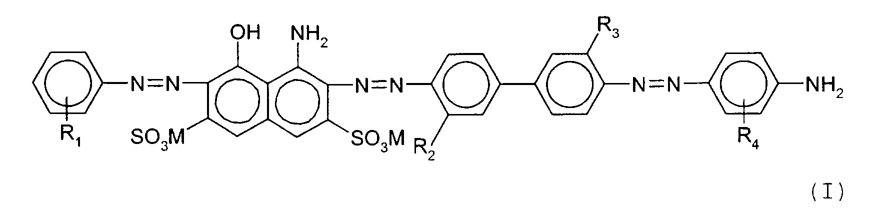
dans laquelle
R₁ est un groupe choisi parmi l'hydrogène, un groupe alkyle, un groupe amino, un groupe hydroxyle et un halogène ;
R₂ et R₃ sont chacun l'hydrogène ou un groupe alkyle ;
R₄ est l'hydrogène ou un groupe amino ; et
M est un métal alcalin ou une alcanolamine ; et 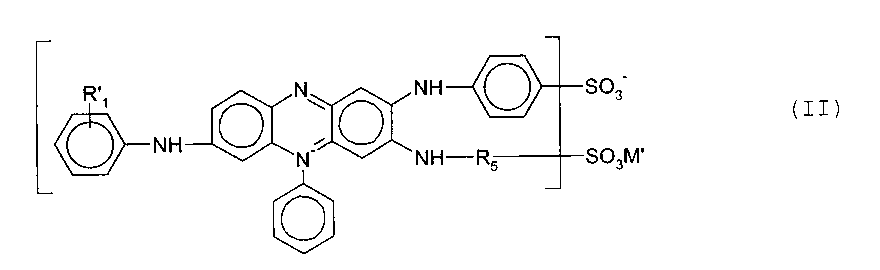 dans laquelle
(1) R'₁ est l'hydrogène, R₅ est un groupe phénylène et M' est le sodium ;
(2) R'₁ est un groupe hydroxyle, R₅ est un groupe phénylène à substitution méthyle, et M' est le sodium ;
(3) R'₁ est un groupe amino, R₅ est un groupe phénylène à substitution hydroxyle et M' est le sodium ; ou
(4) R'₁ est l'hydrogène, R₅ est un groupe phénylène à substitution amino et M' est le sodium.

2. Procédé selon la revendication 1, dans lequel l'angle de contact de la composition d'encre à la matière plastique est situé dans l'intervalle allant de 15 à 60°.

3. Procédé selon la revendication 1, dans lequel l'angle de contact de la composition d'encre à la matière plastique est situé dans l'intervalle allant de 20 à 40°.

4. Procédé selon la revendication 1, dans lequel l'organe de système de délivrance d'encre dans l'appareil d'enregistrement à jet d'encre a une tête d'éjection, un tube de délivrance d'encre et un réservoir d'encre, et la tête d'éjection d'encre est constituée d'une matière plastique.

5. Procédé selon la revendication 1, dans lequel la composition d'encre contient au moins un agent mouillant choisi dans l'ensemble constitué par l'éthylèneglycol, le diéthylèneglycol, le triéthylèneglycol, le polyéthylèneglycol et le glycérol, et de l'eau.

6. Appareil d'enregistrement à jet d'encre alimenté en une composition d'encre aqueuse comprenant les composants (i), (ii), (iii) et (iv) définis dans la revendication 1, et ayant un organe de système de délivrance d'encre dont au moins une partie est composée d'une matière plastique, la composition d'encre ayant un angle de contact à la matière plastique de l'organe de système de délivrance d'encre situé dans l'intervalle allant de 10 à 60°.

7. Composition d'encre aqueuse destinée à être utilisée dans un appareil d'enregistrement à jet d'encre, la composition d'encre comprenant les composants (i), (ii), (iii) et (iv) définis dans la revendication 1, et ayant un angle de contact à un organe de système de délivrance d'encre composé d'une matière plastique choisie parmi la polysulfone, le polytétrafluoroéthylène, le nylon, le polycarbonate, le polyéthylène et le poly(chlorure de vinylidène) situé dans l'intervalle allant de 10 à 60°.
